# EUROPEAN PATENT SPECIFICATION

(11) **EP 0 673 202 B1**
(45) Date of publication and mention of the grant of the patent: **24.03.1999**
(21) Application number: 94903208.0
(22) Date of filing: 17.12.1993
(51) Int. Cl.: A22B 5/00, A22B 5/06

(54) **PROCESS AND APPARATUS FOR PROCESSING AN ANIMAL CARCASS**
VERFAHREN UND VORRICHTUNG ZUM BEARBEITEN VON TIERKÖRPERN
PROCEDE ET APPAREIL PERMETTANT LE DEPE AGE DE LA CARCASSE D'UN ANIMAL

(30) Priority: 18.12.1992 SE 9203839
(43) Date of publication of application: 27.09.1995
(73) Proprietor: KÖTTFORSKNINGSINSTITUTET AB, S-244 24 Kävlinge (SE)
(72) Inventor: GARDELL, Jan, S-297 03 Huaröd (SE); HERLEVSEN, Steen, S-232 53 Akarp (SE)
(74) Representative: Wiklund, Erik
(86) International application number: SE9301079
(87) International publication number: WO9414325

(56) References cited:
- EP-A- 0 121 477
- WO-A-89/05584
- WO-A-92/22210
- DE-C- 967 477

## Description

The present invention relates to a process for slaughtering animals, preferably pigs, in a manner which is more effective and takes the butcher's job environment into consideration, and to an apparatus by means of which the carcass is placed in a suitable working position before each operation in the process. The process and the apparatus are especially adapted to be integrated in a pig slaughtering system. An example of a prior art apparatus is known for instance from EP-A-0,121,477.

The slaughtering of pig is a process which in many respects is industrialised. Traditional slaughtering of pig means that the pig is transported between different processing stations along a line, different operations being carried out at each station. As a result, the tasks at each station are monotonous and the cycles are short (10-20 sec.). The work load at a station is directly dependent on the work carried out at the preceeding stations. Thus, it is not unusual that periods of waiting are inflicted on the personell at a certain station owing to faults or delays at the preceeding stations. One factor is also that the entire line, i.e. each station, must be manned to make the line slaughtering function.

These negative factors cause a number of problems, of which only a few, personally related ones will be mentioned in the following. The above-mentioned monotonous tasks of high repetition frequency result in physical and mental ill-health. Physical injuries are comparatively easy to establish and frequently depend on one-sided strain since the same operation is repeated at short intervals during a complete shift. Mental ill-health is considerably more difficult to establish, but usually arises from a banal task in combination with the feeling of not being able to control or affect the system, but rather being a tiny part of a superior system. Working positions and the working environment are mostly felt as being given, i.e. the personell must adapt to a given design of the line, which in many cases causes ergonomically unsuitable working positions in moist and cold surroundings.

All in all, this leads to a high rate of absence owing to direct accidents happening while at work, many of which must be ascribed to lack of attention owing the monotonous working situation, wear and strain injuries and "inexplicable" reasons which probably depend on phsychological phenomena. In addition to a high rate of absence, which causes problems in the form of shortage of personnel in the line, this also means that it will be more and more difficult to keep and recruit personnel to this trade.

The technical development in the meat trade essentially concerns development of various tools and automation of parts of the slaughtering line, which in practice has resulted in still simpler, manual operations and still shorter cycles.

The main object of the present invention therefore is to develop a pig slaughtering system as an alternative to line slaughtering, while applying optimal solutions regarding phsycosocial and physical work environment conditions, comprising e.g. considerably longer cycles as compared to traditional line slaughtering.

To achieve the first aspect of the above-mentioned main object, a process for processing animal carcasses as claimed in claim 1 is provided.

To achieve the second aspect of the above-mentioned main object, an apparatus for turning an animal carcass as claimed in claim 6 is provided.

The inventive process and one embodiment of the inventive apparatus will be described below with reference to the accompanying drawings.
Fig. 1 is an exemplifying top plan view of a plant for individual processing according to the inventive process.
Fig. 2 is a side view of an apparatus for turning an animal carcass.
Fig. 3 is a partly broken away side view of a supporting arm in a position for clearing the rectum.

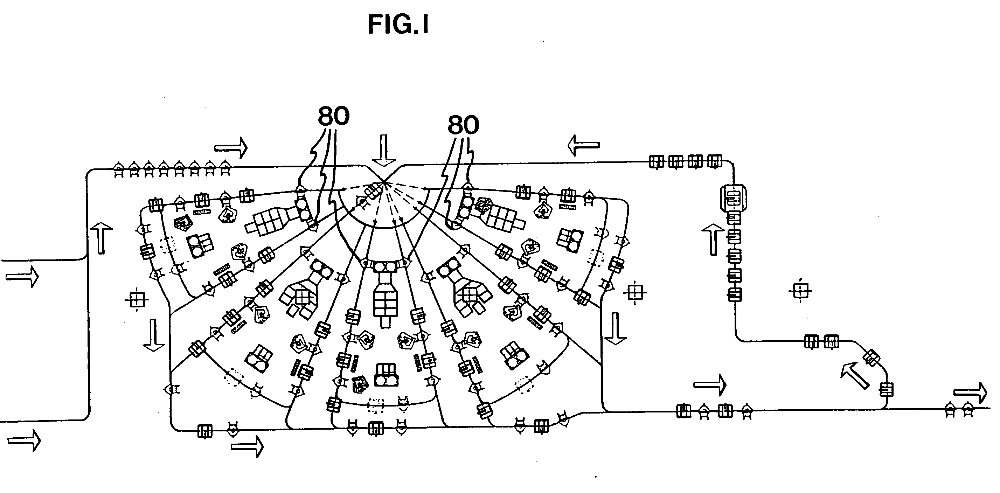

First, the system for individual pig slaughtering as illustrated in Fig. 1 will be described. The system is made up of a plurality of sections in the form of circular segments. In the illustrated layout, five such sections form a semicircular department, and a plurality of such departments may be located in one room. Each department is provided with a supply path for animal carcasses and a supply path for containers, i.e. organ carriers, said paths branching off to each section. Further, each section is connected to a discharge main path for carcasses and organ carriers. Spaced from the department, the organ carriers are separated from the main path and diverted to an emptying device and a subsequent washing device, whereas the carcasses advance to cooling and cutting-up.

Each section contains at least one station which, in addition to the inventive apparatus for processing the carcass, also includes a viscera table with a chute, a tool rack for e.g. a rip saw and a drill for clearing the rectum, a chute for condemned parts, a wash basin etc. This results in a very flexible organisation, allowing one person to be responsible for the slaughtering of an entire pig, including cutting-up of the organ package. The person will be working at his own speed and is not dependent on delays in a previous link.

Pig slaughtering according to the inventive configuration proceeds as follows.

First, the butcher requests supplying of a carcass which is supplied, preferably from a buffer via the carcass switching device of the department, to the correct station in the corresponding section. The carcass is suspended from an overhead rail by its hind legs and advances in a prior art manner. The carcass stops at a fixture which preferably comprises the inventive apparatus for processing the carcass as described below. In this position, a number of steps will be taken according to one embodiment of the inventive process.
- Phase 1:: locking the carcass
sawing through the chest
sterilising the chest saw
- Phase 2:: locking the forelegs
lowering and cutting the throat ureter
pelvis
opening the abdomen
- Phase 3:: turning the carcass aside
tilting backwards (optional)
clearing the rectum, manually or by means of a drill
sterilising the knife or drill
cutting through the pelvic symphysis
- Phase 4:: tilting forwards (optional)
raising the rear end of the carcass
turning back, sealing off the rectum
raising
tilting forwards
removing the intestine
removing the kidney
opening the chest
removing the internal fat
- Phase 5:: tilting backwards
raising
removing the tongue
suspending the organ package
- Phase 6:: removing the forelegs
tilting forwards
lowering
turning aside (optional)
splitting
raising and splitting
sterilizing the saw
if necessary, turning back to the starting position
- Phase 7:: cutting up the organ package
- Phase 8:: raising
tilting backwards
trimming the neck
removing the head
- Phase 9:: lowering
tilting to vertical position
returning to overhead rail
- Phase 10:: removing the prepared carcass
fetching a new carcass

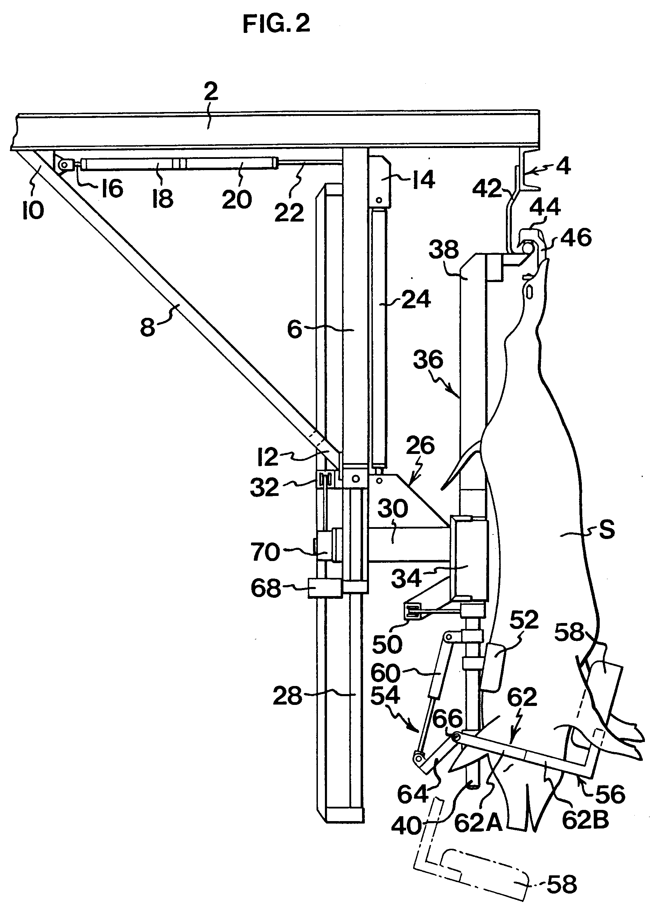

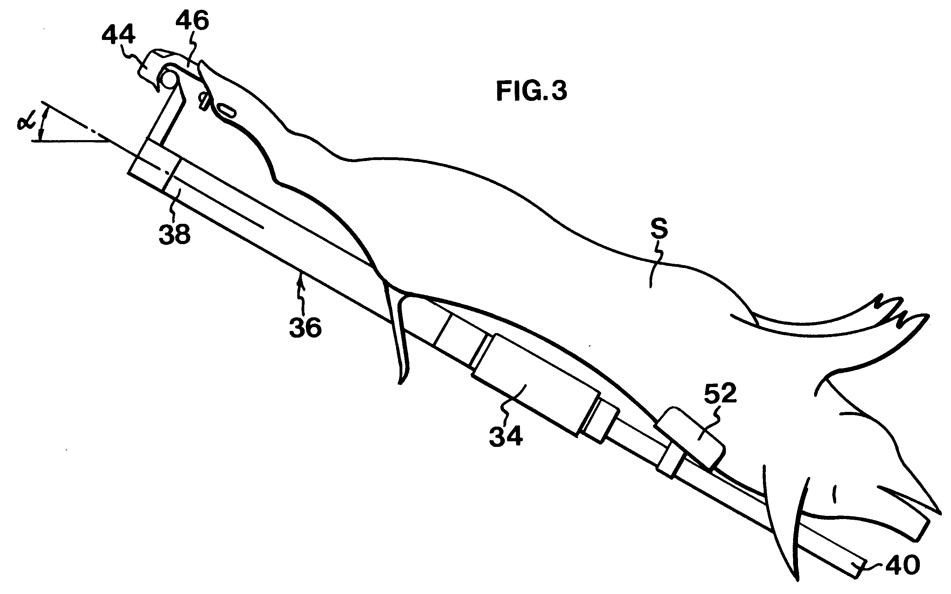

The inventive apparatus for processing a carcass, which is preferably used in the system for carrying out the inventive process, is illustrated in Figs 2 and 3.

The illustrated embodiment of the apparatus according to the present invention is arranged on an existing supporting rail 2 of an overhead rail 4 such that a base element 6 extends downwards essentially vertically. For stabilising the essentially vertical base element 6, there is arranged a crossbar 8 whose one end 10 is attached to said supporting rail 2 and whose opposite end 12 is attached to the downwardly directed end of the base element 6 facing away from the supporting rail 2. A frame member 14 is turnably attached to the base element 6 and intended for turning the carcass 6 about different axes, which will be described below.

To said one end 10 of the crossbar 8 there is attached the piston 16 of a first piston-and-cylinder assembly 18, whose end facing away from the point of attachment is connected to the cylinder of a second piston-and-cylinder assembly 20, which thus results in a unit of two essentially horizontally extending piston-and-cylinder assemblies 18 and 20 connected in series. The piston 22 of the second piston-and-cylinder assembly 20 is attached to the upper end of the frame member 14. To this end, there is also attached the end of a third, essentially vertically extending piston-and-cylinder assembly 24 whose one end is connected to an essentially horizontal bearing means 26 which in turn is slidably supported by a pivot shaft 28 extending essentially in parallel with the third piston-and-cylinder assembly 24, for reasons which will be described below. The horizontal bearing means 26 comprises a sleeve-shaped member 30 supporting a shaft whose one end is connected to a first turning member 32 and whose opposite end is connected to a vertical bearing means 34. A supporting arm 36, which in the starting position extends essentially vertically, is rotatably supported by said bearing means 34. The supporting arm 36 comprises an upper portion 38 and a lower portion 40.

The upper portion 38 of said supporting arm 36 is connected to a moving part 42 of the overhead rail 4 and is provided with locking means 44 for effectively locking a suspension device 46 which is intended for the carcass S and movable along the overhead rail 4, said locking means 44 permitting releasable fixing of the suspension device 46 to the upper portion 38 of the supporting arm 36. As an alternative to the embodiment described, it is possible to arrange at the upper portion 38 support means for the pelvis portion of the carcass S.

The lower portion 40 of the supporting arm 36 is fixedly connected to a second turning member 50 for turning the supporting arm 36 about its own longitudinal axis. At the level of the shoulder portion of the carcass S there is also arranged a lower support member 52 intended for the shoulder portion of the carcass S and movable in vertical and/or horizontal direction. In the illustrated embodiment of the present invention there is also arranged, at the level of the head of the carcass S, a member 54 for fixing the lower part of the carcass S, i.e. the front end, which like the lower support member 52 preferably is movable in vertical and/or horizontal direction. The fixing member 54 comprises a pair of L-shaped fixing means 56 of which only one is shown in Fig. 1 and which are designed and operable so as to be movable from a starting position indicated by dash-dot lines in Fig. 1 to a position fixing the carcass S and indicated by full lines in Fig. 1, in which fixing position a leg 58 of each of the fixing means 56 is positioned between the forelegs of the carcass S, thereby fixing the carcass. For moving the fixing means 56 between said end positions, the fixing member 54 further comprises a piston-and-cylinder assembly 60 which via a lever member 64 fixedly connected to the second leg 62 of the fixing means 56 permits pivoting of the fixing means 56 about a pivot 66. For accomplishing said essentially horizontal movement, e.g. the second leg 62 may be telescopic and contain spring-loaded telescoping parts 62A, 62B.

In practice, the inventive apparatus functions as follows. The butcher requests supplying of a carcass S by operating a control switch of a control device 68 for controlling the inventive apparatus. From e.g. a buffer for carcasses S, a carcass S is supplied along the overhead rail 4 to the correct department, correct section and correct buffer station. From the buffer station 80 which is intended for one carcass S at a time and which is arranged just before the inventive apparatus, see Fig. 1, the carcass S is fed into the inventive apparatus in which it is caused to stop at the moving part 42 of the overhead rail 4. The locking means 44 is then activated automatically, whereby the suspension device 46 from which the carcass S is suspended is effectively fixed to the moving part 42 fixedly connected to the upper portion 38 of the supporting arm 36, and subsequently the moving part 42 can be released from the overhead rail. If necessary, the carcass S is turned such that the shoulder portion of the carcass engages the lower support member 52. In case an upper support member is arranged, this is caused to engage the pelvis portion of the carcass S. As mentioned above, the lower support member 52, and if available the upper support member, is adjustable in vertical and/or horizontal direction.

After sawing through the chest, the piston-and-cylinder assembly 60 for operating the fixing member 54 is activated, whereby the fixing means 56 are moved from the starting position to the fixing position in which one leg 58 of each fixing means is positioned between the forelegs of the carcass S, thereby applying to the inside of the forelegs forces acting in the opposite direction and tending to separate the carcass S. Subsequently, the carcass is automatically lowered by activating the third piston-and-cylinder assembly 24, whereby the carcass S performs a downwardly directed rectilinear movement such that the abdomen of the carcass takes a position convenient for processing. After opening the abdomen, the second turning member 50 is activated, whereby the supporting arm 36 is caused to rotate about its longitudinal axis. This turning motion occurs over an angle area of preferably 90°. After this operation, the carcass S is in a position intended for clearing the rectum.

According to an alternative embodiment, the supporting arm 36 is also turned about the pivot shaft 70 extending perpendicularly to the longitudinal axis of the supporting arm 36, by activating the first turning member 32. This pivotal movement occurs through an angle area of preferably 60° such that the carcass takes the position illustrated in Fig. 2, in which the supporting arm 36 forms an angle α of about 30° with the horizontal plane, whereby the carcass S takes a position convenient for clearing the rectum. This operation implies separating of the rectum from the carcass S by means of a suitable drill or by means of a knife. In connection with this operation, also the pelvic symphysis is cut through. If required, the turning movements described above are automatically reversed, i.e. the supporting arm 36 is pivoted back to an essentially vertical position and rotated about its own longitudinal axis back to the starting position. By automatically activating the first piston-and-cylinder assembly 18 and then immediately activating the third piston-and-cylinder assembly 24, the upper part of the frame member 14 is first tilted forwards and the entire frame member 14 is raised. At the same time as this movement pattern is carried out, the following operations take place: removing the intestine, removing the kidney, opening the chest and removing the internal fat. Then the upper end of the frame member 14 is tilted backwards by activating the first and the second piston-and-cylinder assembly 18, 20 at the same time as the frame member 14 is raised further. In this position, the carcass has taken a position which is convenient for removing the tongue and the organ package.

The next operation is detaching the lower fixing of the carcass S by correspondingly activating the piston-and-cylinder assembly 60 for operating the fixing member 54, whereby the fixing means 56 are moved from the fixing position, in which one leg 58 of each fixing means is positioned between the forelegs of the carcass S, to the starting position indicated by dash-dot lines in Fig. 1. By tilting the frame member 14 forwards, which occurs by correspondingly activating the piston-and-cylinder assemblies 18 and 20, or by correspondingly moving the lower support member 52 horizontally, the carcass 1 is moved before the splitting to a position at a safe distance from the base elements. After lowering the carcass S by activating the third piston-and-cylinder assembly 24, it is thus possible to begin the splitting of the carcass in the longitudinal direction thereof, since the lower support member 52 is in two pieces and has an essentially vertical partition line. After a presettable period of time, the forwardly tilted frame element 14 is raised, the period of time being adapted to the sawing speed such that the carcass always takes a position convenient for processing.

For removing the head of the carcass S and trimming the neck, the frame element 14 is tilted backwards by activating the piston-and-cylinder assemblies 18 and 20 and the frame element 14 is raised, the carcass thereby taking a position which is convenient for processing, at the same time as the lower support member 52 supports this portion.

Finally, the inventive apparatus is reset to the starting position in which the frame element 14 and, thus, the supporting arm 36 extend essentially vertically and the processed carcass is returned to the overhead rail along which it is transported away to the final processing.

A person skilled in the art may, of course, find alternative embodiments and carry out modifications which fall within the scope of the inventive idea. Thus, further developments of the control technique will be effected in the present invention so as to further facilitate the operations. All such changes and modifications are therefore intended to be comprised by the scope of protection, as indicated by the appended claims.

## Claims

1. Process for processing a carcass, comprising the steps of fixing the carcass in an essentially vertical position, head downwards, opening the chest, opening the abdomen, clearing the rectum and cutting through the pelvic symphysis, removing the intestines, removing the organ package, splitting the carcass in its longitudinal direction, and loosing the head, **characterised** by the steps of
before opening the abdomen, cutting the throat and moving the carcass in the direction of a second main axis (Y) in a perpendicular system of coordinates (X, Y, Z),
before removing the intestines, raising the carcass while turning it about a horizontal main axis (X, Z) in said perpendicular system of coordinates, advancing the rear end of the carcass relative to the front end, the longitudinal axis of said carcass forming an angle with the vertical plane,
removing the intestines,
loosing the organs of the carcass,
reversing said turning about the first horizontal main axis (X, Z), while raising the carcass in the direction of said second main axis (Y),
turning the carcass about a third main axis (Z) in said perpendicular system of coordinates, the organ package being removed, while lowering the carcass,
splitting the carcass, while moving it in the direction of said second main axis (Y),
reversing said turning about the third main axis (Z), and
trimming the neck and loosing the head.

2. Process as claimed in claim 1, **characterised** in that the step of opening the abdomen is followed by the step of advancing the carcass to a position for clearing the rectum by turning the carcass about said second main axis (Y) and, subsequently, about said first main axis (X), in which position the carcass, the abdomen being oriented essentially upwards, forms an angle of preferably 30° with the horizontal plane, whereupon said turning movements are reversed and, thus, the carcass is returned to the starting position.

3. Process as claimed in claim 1 or 2, **characterised** by the step of fixing the front end of the carcass after opening the chest thereof.

4. Process as claimed in claim 2, **characterised** in that said step of turning the carcass to the position for clearing the rectum is followed by the step of supporting the pelvis portion for the purpose of straightening the rectum.

5. Process as claimed in claim 3, **characterised** in that, before the step of splitting the carcass, at least the front end of the carcass is moved in the direction of said first main axis (X) so as to establish a safe distance.

6. Apparatus for individual processing of a carcass, whereby there is arranged in a base element (6) a frame member (14), that an elongate, essentially vertical supporting arm (36) is movably connected to the frame member (14), said supporting arm (36) supporting at its upper end (38) the carcass (S), and that there are arranged control means (18, 20, 32, 50) connected to the frame member (14) and the supporting arm (36), respectively, **characterised** in that said apparatus is adapted to turn the carcass (S) about three main axes (X, Y, Z) in a perpendicular system of coordinates.

7. Apparatus as claimed in claim 6, **characterised** in that said frame member (14) is pivoted to said base element (6), and that a first and a second control means (18, 20) are connected to the frame member (14) and the base element (6), respectively, for turning the frame member about at least one axis (Z) of said perpendicular system of coordinates.

8. Apparatus as claimed in claim 6 or 7, **characterised** in that an essentially horizontal bearing means (26) connects the supporting arm (36) with the frame member (14), that said bearing means (26) is displaceable in essentially vertical direction along a pivot shaft (28) connected to the frame member (14) and extending in parallel with the supporting arm (36), and that there is arranged a third control means (24) for moving said bearing means (26) and the supporting arm (36) connected therewith in vertical direction.

9. Apparatus as claimed in claim 8, **characterised** in that said horizontal bearing means (26), via a vertical bearing means (34), between which there is formed an essentially right angle, rotatably supports said supporting arm (36), and that a first turning member (32) and a second turning member (50) are connected with said horizontal bearing means (26) and said vertical bearing means (34), respectively, for rotating the supporting arm about at least two main axes (X and Y, respectively) of said perpendicular system of coordinates.

10. Apparatus as claimed in any one of claims 6-9, **characterised** in that a lower support member (52) for the shoulder portion of the carcass (S) is arranged at a lower portion (40) of said supporting arm (36).

11. Apparatus as claimed in any one of claims 6-10, **characterised** in that an upper support member (48) for the pelvis portion of the carcass (S) is arranged at the upper portion (38) of said supporting arm (36).

12. Apparatus as claimed in claim 10 or 11, **characterised** in that said support members (48, 52) are movable along the upper portion (38) and the lower portion (40), respectively, of the supporting arm (36) and that each support member (48, 52) is movably mounted to be adapted to the spine of the carcass (S).

13. Apparatus as claimed in claim 10, 11 or 12, **characterised** in that said support members (48, 52) are movable in essentially horizontal direction away from the supporting arm (36).

14. Apparatus as claimed in claim 10, 11, 12 or 13, **characterised** in that said support members (48, 52) are divided in the vertical plane, the spine of the carcass (S) being positioned between the respective halves of said support members (48, 52), thereby facilitating splitting of the carcass.

15. Apparatus as claimed in any one of claims 6-14, **characterised** in that at the level of the lower portion (40) of said supporting arm (36) there is arranged a fixing member (54) for fixing the front end of the carcass (S).

16. Apparatus as claimed in claim 15, **characterised** in that said fixing member (54) comprises a pair of L-shaped fixing means (56) with two end positions, viz. a starting position, and a position fixing the carcass (S), one leg (58) of each fixing means (56) applying, in said fixing position, pressure to the inside of the forelegs of said carcass (S), and that there is arranged a fourth control means (60) for moving the fixing means (56) between said end positions.

17. Apparatus as claimed in claim 15 or 16, **characterised** in that the fixing member (54) is movable by means of a telescopic member (62a, 62B) in essentially horizontal direction away from the supporting arm (36).

18. Apparatus as claimed in any one of claims 6-17, **characterised** in that the base element (6) is suspended from a supporting rail (2), and that a suspension device (46) for the carcass (S) is moved along an overhead rail (4), a moving part (42) of said overhead rail (4) being detachably connectible to the upper portion (38) of said supporting arm (36) by means of a locking member (44).

19. Apparatus as claimed in any one of claims 6-18, **characterised** by a control unit (68) for controlling said control means (18, 20, 24, 60) and said turning members (32, 50) according to a control pattern which is predictable and stored therein, and for controlling external equipment, such as a processing robot.

20. Apparatus as claimed in claims 6, 8 or 16, **characterised** in that said control means (18, 20, 24, 60) comprise piston-and-cylinder assemblies, and that said turning members (32, 50) comprise stepping motors.

## Patentansprüche

1. Verfahren zur Bearbeitung eines Schlachtkörpers, mit den folgenden Schritten: Befestigen des Schlachtkörpers in einer im wesentlichen vertikalen Position mit dem Kopf nach unten, Öffnen des Brustkorbs, Öffnen des Bauches, Entfernen des Rektums und Durchschneiden der Beckensymphyse, Entfernen der Gedärme, Entfernen des Organpakets, Teilen des Schlachtkörpers in seiner Längsrichtung und Ablösen des Kopfes, gekennzeichnet durch die folgenden Schritte:
vor Öffnen des Bauches, Durchtrennen der Kehle und Bewegen des Schlachtkörpers in Richtung einer zweiten Hauptachse (Y) in einem rechtwinkligen Koordinatensystem (X, Y, Z),
vor Entfernen der Gedärme, Anheben des Schlachtkörpers unter Drehung desselben um eine horizontale Hauptachse (X, Z) in dem rechtwinkligen Koordinatensystem, Vorrücken des hinteren Endes des Schlachtkörpers bezüglich des vorderen Endes, wobei die Längsachse des Schlachtkörpers mit der Vertikalebene einen Winkel bildet,
Entfernen der Gedärme,
Ablösen der Organe des Schlachtkörpers,
Umkehren des Drehens um die erste horizontale Hauptachse (X, Z) unter Anheben des Schlachtkörpers in Richtung der zweiten Hauptachse (Y),
Drehen des Schlachtkörpers um eine dritte Hauptachse (Z) in dem rechtwinkligen Koordinatensystem, wobei das Organpaket entfernt wird, und dabei Absenken des Schlachtkörpers,
Teilen des Schlachtkörpers und ihn dabei in Richtung der zweiten Hauptachse (Y) bewegen,
Umkehren des Drehens um die dritte Hauptachse (Z) und
Zurechtschneiden des Halses und Ablösen des Kopfes.

2. Verfahren nach Anspruch 1, dadurch gekennzeichnet, daß der Schritt des Öffnen des Bauches von dem Schritt des Vorrückens des Schlachtkörpers in eine Position zum Entfernen des Rektums durch Drehen des Schlachtkörpers um die zweite Hauptachse (Y) und anschließend um die erste Hauptachse (X) gefolgt wird, wobei der Schlachtkörper in dieser Position - mit im wesentlichen nach oben ausgerichtetem Bauch - mit der Horizontalebene einen Winkel von vorzugsweise 30° bildet, wonach die Drehbewegungen umgekehrt werden und der Schlachtkörper somit in die Startposition zurückgebracht wird.

3. Verfahren nach Anspruch 1 oder 2, dadurch gekennzeichnet, daß der Schritt des Befestigens des vorderen Endes des Schlachtkörpers nach dem Öffnen seines Brustkorbs ausgeführt wird.

4. Verfahren nach Anspruch 2, dadurch gekennzeichnet, daß der Schritt des Drehens des Schlachtkörpers in die Position zum Entfernen des Rektums von dem Schritt des Abstützens des Beckenteils zum Zwecke des Geraderichtens des Rektums gefolgt wird.

5. Verfahren nach Anspruch 3, dadurch gekennzeichnet, daß vor dem Schritt des Teilens des Schlachtkörpers mindestens das vordere Ende des Schlachtkörpers in Richtung der ersten Hauptachse (X) bewegt wird, um einen sicheren Abstand herzustellen.

6. Vorrichtung zur individuellen Bearbeitung eines Schlachtkörpers, bei der ein Rahmenglied (14) in einem Basiselement (6) angeordnet ist, ein länglicher, im wesentlichen vertikaler Stützarm (36) mit dem Rahmenglied (14) beweglich verbunden ist, wobei der Stützarm (36) an seinem oberen Ende (38) den Schlachtkörper (S) stützt, und Steuermittel (18, 20, 32, 50) angeordnet sind, die mit dem Rahmenglied (14) bzw. dem Stützarm (36) verbunden sind, dadurch gekennzeichnet, daß die Vorrichtung so ausgeführt ist, daß sie den Schlachtkörper (S) um drei Hauptachsen (X, Y, Z) in einem rechtwinkligen Koordinatensystem drehen kann.

7. Vorrichtung nach Anspruch 6, dadurch gekennzeichnet, daß das Rahmenglied (14) an dem Basiselement (6) angelenkt ist und daß ein erstes und ein zweites Steuermittel (18, 20) mit dem Rahmenglied (14) bzw. dem Basisglied (6) verbunden sind, um das Rahmenglied um mindestens eine Achse (Z) des rechtwinkligen Koordinatensystems zu drehen.

8. Vorrichtung nach Anspruch 6 oder 7, dadurch gekennzeichnet, daß ein im wesentlichen horizontales Tragmittel (26) den Stützarm (36) mit dem Rahmenglied (14) verbindet, daR das Tragmittel (26) im wesentlichen in Vertikalrichtung entlang einer Drehachse (28), die mit dem Rahmenglied (14) verbunden ist und sich parallel zu dem Stützarm (36) erstreckt, verschiebbar ist, und daß ein drittes Steuermittel (24) zum Bewegen des Tragmittels (26) und des damit verbundenen Stützarms (36) in Vertikalrichtung angeordnet ist.

9. Vorrichtung nach Anspruch 8, dadurch gekennzeichnet, daß das horizontale Tragmittel (26) über ein vertikales Tragmittel (34), zwischen denen ein im wesentlichen rechter Winkel gebildet ist, den Stützarm (36) drehbar stützt und daß ein erstes Drehglied (32) und ein zweites Drehglied (50) mit dem horizontalen Tragmittel (26) bzw. dem vertikalen Tragmittel (34) zum Drehen des Stützarms um mindestens zwei Hauptachsen (X bzw. Y) des rechtwinkligen Koordinatensystems verbunden sind.

10. Vorrichtung nach einem der Ansprüche 6 - 9, dadurch gekennzeichnet, daß ein unteres Stützglied (52) für den Schulterteil des Schlachtkörpers (S) an einem unteren Teil (40) des Stützarms (36) angeordnet ist.

11. Vorrichtung nach einem der Ansprüche 6 - 10, dadurch gekennzeichnet, daß ein oberes Stützglied (48) für den Beckenteil des Schlachtkörpers (S) am oberen Teil (38) des Stützarms (36) angeordnet ist.

12. Vorrichtung nach Anspruch 10 oder 11, dadurch gekennzeichnet, daß die Stützglieder (48, 52) entlang dem oberen Teil (38) bzw. dem unteren Teil (40) des Stützarms (36) beweglich sind und daß jedes Stützglied (48, 52) zur Anpassung an die Wirbelsäule des Schlachtkörpers (S) beweglich angebracht ist.

13. Vorrichtung nach Anspruch 10, 11 oder 12, dadurch gekennzeichnet, daß die Stützglieder (48, 52) in im wesentlicher horizontaler Richtung von dem Stützarm (36) weg beweglich sind.

14. Vorrichtung nach Anspruch 10, 11, 12 oder 13, dadurch gekennzeichnet, daß die Stützglieder (48, 52) in der Vertikalebene geteilt sind, wobei die Wirbelsäule des Schlachtkörpers (S) zwischen den jeweiligen Hälften der Stützglieder (48, 52) positioniert ist, wodurch die Teilung des Schlachtkörpers erleichtert wird.

15. Vorrichtung nach einem der Ansprüche 6 - 14, dadurch gekennzeichnet, daß in Höhe des unteren Teils (40) des Stützarms (36) ein Befestigungsglied (54) zur Befestigung des vorderen Endes des Schlachtkörpers (S) angeordnet ist.

16. Vorrichtung nach Anspruch 15, dadurch gekennzeichnet, daß das Befestigungsglied (54) ein Paar L-förmiger Befestigungsmittel (56) mit zwei Endpositionen umfaßt, nämlich einer Startposition und einer den Schlachtkörper (S) befestigenden Position, wobei ein Schenkel (58) jedes Befestigungsmittels (56) in der Befestigungsposition Druck auf die Innenseite der Vorderbeine des Schlachtkörpers (S) ausübt, und daß ein viertes Steuermittel (60) zur Bewegung des Befestigungsmittels (56) zwischen den Endpositionen angeordnet ist.

17. Vorrichtung nach Anspruch 15 oder 16, dadurch gekennzeichnet, daß das Befestigungsmittel (54) mittels eines zusammenschiebbaren Glieds (62a, 62B) in im wesentlichen horizontaler Richtung von dem Stützarm (36) weg bewegbar ist.

18. Vorrichtung nach einem der Ansprüche 6 - 17, dadurch gekennzeichnet, daß das Basiselement (6) an einer Stützschiene (2) aufgehängt ist und daß eine Aufhängevorrichtung (46) für den Schlachtkörper (S) an einer Überkopfschiene (4) entlangbewegt wird, wobei ein bewegliches Teil (42) der Überkopfschiene (4) mittels eines Verriegelungsglieds (44) mit dem oberen Teil (38) des Stützarms (36) lösbar verbunden werden kann.

19. Vorrichtung nach einem der Ansprüche 6 - 18, gekennzeichnet durch eine Steuereinheit (68) zur Steuerung der Steuermittel (18, 20, 24, 60) und der Drehglieder (32, 50) gemäß einem Steuerablauf, der vorhersagbar und darin gespeichert ist, und zur Steuerung äußerer Einrichtungen wie zum Beispiel eines Bearbeitungsroboters.

20. Vorrichtung nach Anspruch 6, 8 oder 16, dadurch gekennzeichnet, daß die Steuermittel (18, 20, 24, 60) Kolben-/Zylinderanordnungen umfassen und daß die Drehglieder (32, 50) Schrittmotoren umfassen.

## Revendications

1. Procédé pour traiter une carcasse, comprenant les étapes consistant à fixer la carcasse dans une position essentiellement verticale, la tête étant orientée vers le bas, ouvrir la poitrine, ouvrir l'abdomen, enlever le rectum et inciser la symphyse pubienne, retirer les intestins, retirer la masse d'organes, fendre la carcasse dans sa direction longitudinale et détacher la tête, caractérisé par les étapes consistant a:
avant d'ouvrir l'abdomen, couper la gorge et déplacer la carcasse dans la direction d'un deuxième axe principal (Y) dans un système perpendiculaire de coordonnées (X, Y, Z),
avant de retirer les intestins, soulever la carcasse tout en la faisant tourner autour d'un axe principal horizontal (X, Z) dans ledit système perpendiculaire de coordonnées, faire avancer l'extrémité arrière de la carcasse par rapport à l'extrémité avant, l'axe longitudinal de ladite carcasse formant un angle avec le plan vertical,
retirer les intestins,
détacher les organes de la carcasse,
inverser ladite rotation autour du premier axe principal horizontal (X, Z) tout en soulevant la carcasse dans la direction dudit deuxième axe principal (Y),
faire tourner la carcasse autour d'un troisième axe principal (Z) dans ledit système perpendiculaire de coordonnées et retirer la masse d'organes, tout en abaissant la carcasse,
fendre la carcasse tout en la déplaçant dans la direction dudit deuxième axe principal (Y),
inverser ladite rotation autour du troisième axe principal (Z), et
arranger le cou et détacher la tête.

2. Procédé selon la revendication 1, caractérisé en ce que l'étape consistant à ouvrir l'abdomen est suivie par l'étape consistant à faire avancer la carcasse jusqu'à une position permettant d'enlever le rectum en faisant tourner la carcasse autour dudit deuxième axe principal (Y) et, par la suite, autour dudit premier axe principal (X), position dans laquelle la carcasse, l'abdomen étant orienté essentiellement vers le haut, forme un angle de préférence de 30 degrés avec le plan horizontal, après quoi, lesdits mouvements de rotation sont inversés, si bien que la carcasse retourne à sa position de départ.

3. Procédé selon la revendication 1 ou 2, caractérisé par l'étape consistant à fixer l'extrémité frontale de la carcasse après ouverture de sa poitrine.

4. Procédé selon la revendication 2, caractérisé en ce que ladite étape consistant à faire tourner la carcasse pour l'amener dans la position permettant d'enlever le rectum est suivie par l'étape consistant à supporter la portion pubienne dans le but de redresser le rectum.

5. Procédé selon la revendication 3, caractérisé en ce que, avant l'étape consistant à fendre la carcasse, on déplace au moins l'extrémité frontale de la carcasse dans la direction dudit premier axe principal (X) de façon à établir une distance de sécurité.

6. Appareil pour le traitement individuel d'une carcasse, par lequel on monte dans un élément de base (6) un élément de cadre (14), un bras de support allongé (36) essentiellement vertical étant relié en mobilité audit élément de cadre (14), ledit bras de support (36) supportant, à son extrémité supérieure (38), la carcasse (S), des moyens de commande (18, 20, 32, 50) étant arrangés pour être reliés à l'élément de cadre (14) et au bras de support (36), respectivement, caractérisé en ce que ledit appareil est conçu pour faire tourner la carcasse (S) autour de trois axes principaux (X, Y, Z) dans un système perpendiculaire de coordonnées.

7. Appareil selon la revendication 6, caractérisé en ce que ledit élément de cadre (14) pivote autour dudit élément de base (6) et en ce qu'un premier et un second moyen de commande (18, 20) sont raccordés à l'élément de cadre (14) et à l'élément de base (6), respectivement, pour faire tourner l'élément de cadre autour d'au moins un axe (Z) dudit système perpendiculaire de coordonnées.

8. Appareil selon la revendication 6 ou 7, caractérisé en ce qu'un moyen de support (26) essentiellement horizontal raccorde le bras de support (36) à l'élément de cadre (14), en ce que ledit moyen de support (26) est à même de se déplacer dans une direction essentiellement verticale le long d'un arbre pivotant (28) raccordé à l'élément de cadre (14) et s'étendant parallèlement au bras de support (36), et en ce qu'on arrange un troisième moyen de commande (24) pour déplacer ledit moyen de support (26) et le bras de support (36) raccordé à ce dernier, en direction verticale.

9. Appareil selon la revendication 8, caractérisé en ce que ledit moyen de support horizontal (26), via un moyen de support vertical (34), ces deux moyens formant entre eux un angle essentiellement droit, supporte en rotation ledit bras de support (36) et en ce qu'un premier élément de rotation (32) et un second élément de rotation (50) sont raccordés audit élément de support horizontal (26) et audit moyen de support vertical (34), respectivement, pour faire tourner le bras de support autour d'au moins deux axes principaux (X et Y, respectivement) dudit système perpendiculaire de coordonnées.

10. Appareil selon l'une quelconque des revendications 6 à 9, caractérisé en ce qu'un élément de support inférieur (52) pour la portion d'épaule de la carcasse (S) est monté sur une portion inférieure (40) dudit bras de support (36).

11. Appareil selon l'une quelconque des revendications 6 à 10, caractérisé en ce qu'un élément de support supérieur (48) pour la portion pubienne de la carcasse (S) est monté sur la portion supérieure (38) dudit bras de support (36).

12. Appareil selon la revendication 10 ou 11, caractérisé en ce que lesdits éléments de support (48, 52) sont mobiles le long de la portion supérieure (38) et le long de la portion inférieure (40), respectivement, du bras de support (36) et en ce que chaque élément de support (48, 52) est monté en mobilité pour s'adapter à la colonne vertébrale de la carcasse (S).

13. Appareil selon la revendication 10, 11 ou 12, caractérisé en ce que lesdits éléments de support (48, 52) sont mobiles dans une direction essentiellement horizontale en s'écartant du bras de support (36).

14. Appareil selon la revendication 10, 11, 12 ou 13, caractérisé en ce que lesdits éléments de support (48, 52) sont divisés dans le plan vertical, la colonne vertébrale de la carcasse (S) étant positionnée entre les moitiés respectives desdits éléments de support (48, 52) pour faciliter le fait de fendre la carcasse.

15. Appareil selon l'une quelconque des revendications 6 à 14, caractérisé en ce qu'au niveau de la portion inférieure (40) dudit bras de support (36), on monte un élément de fixation (54) pour fixer l'extrémité frontale de la carcasse (S).

16. Appareil selon la revendication 15, caractérisé en ce que ledit élément de fixation (54) comprend une paire de moyens de fixation en L (56) possédant deux positions terminales, c'est-à-dire une position de départ et une position fixant la carcasse (S), une branche (58) de chaque moyen de fixation (56) exerçant, dans ladite position de fixation, une pression sur l'intérieur des pattes avant de ladite carcasse (S), et en ce qu'on monte un quatrième moyen de commande (60) pour déplacer le moyen de fixation (56) entre lesdites positions terminales.

17. Appareil selon la revendication 15 ou 16, caractérisé en ce que l'élément de fixation (54) est mis en mobilité au moyen d'un élément télescopique (62A, 62B) dans une direction essentiellement horizontale s'écartant du bras de support (36).

18. Appareil selon l'une quelconque des revendications 6 à 17, caractérisé en ce que l'élément de base (6) est suspendu à un rail de support (2) et en ce qu'un dispositif de suspension (46) pour la carcasse (S) se déplace le long d'un rail aérien (4), une partie mobile (42) dudit rail aérien (4) étant à même d'être raccordée de manière amovible à la portion supérieure (38) dudit bras de support (36) au moyen d'un élément de verrouillage (44).

19. Appareil selon l'une quelconque des revendications 6 à 18, caractérisé par une unité de commande (68) pour commander lesdits moyens de commande (18, 20, 24, 60) et lesdits éléments de mise en rotation (32, 50) conformément à un modèle de commande qui est prédictible et mémorisé dans le premier cité, ainsi que pour commander un équipement externe tel qu'un robot de traitement.

20. Appareil selon la revendication 6, 8 ou 16, caractérisé en ce que lesdits moyens de commande (18, 20, 24, 60) comprennent des assemblages à pistons et cylindres, et en ce que lesdits éléments de mise en rotation (32, 50) comprennent des moteurs pas-à-pas.
